# EUROPÄISCHE PATENTSCHRIFT

(11) **EP 2 345 525 B1**
(45) Veröffentlichungstag und Bekanntmachung des Hinweises auf die Patenterteilung: **13.01.2016**
(21) Anmeldenummer: 11003427.9
(22) Anmeldetag: 16.04.2007
(51) Int. Cl.: B29C 51/02, B29C 37/00, B29C 51/00, B29C 33/60, B29C 51/26, B29C 33/58, G06T 17/10, B29K 309/08, G06T 3/00, G03F 1/00, B41M 1/40, B29C 51/10, B29C 51/30, B29C 59/02, B29C 59/04

(54) **Verfahren zum Erzeugen einer dreidimensionalen Freiformfläche mit haptisch und/oder optisch wahrnehmbaren Mikrostrukturen**
Method for creating a three dimensional freeform surface with haptically and/or optically observable microstructures
Dispositif destiné à la production d'une surface de forme libre en trois dimensions avec des microstructures haptiques et/ou optiques perceptibles

(30) Priorität: 04.05.2006 DE 102006020667
(43) Veröffentlichungstag der Anmeldung: 20.07.2011
(62) Teilanmeldung aus: 07007707.8
(73) Patentinhaber: K1 GmbH, 48691 Vreden (DE)
(72) Erfinder: Saueressig, Kilian, 48691 Vreden (DE)
(74) Vertreter: Angerhausen, Christoph

(56) Entgegenhaltungen:
- EP-A2- 0 393 767
- WO-A-02/43946
- WO-A2-2006/042319
- DE-A1- 2 055 068
- US-A1- 2005 146 073

## Beschreibung

Die Erfindung betrifft ein Verfahren zum Erzeugen einer dreidimensionalen Freiformfläche mit haptisch und/oder optisch wahrnehmbaren Mikrostrukturen, wobei die Mikrostrukturen als Datensatz festgehalten sind.

Aus dem Stand der Technik sind Wege bekannt, dreidimensionale Oberflächen mit Strukturen zu versehen, die jedoch oftmals nicht hohen qualitativen Anforderungen genügen, was Maßhaltigkeit, für den Betrachter erkennbare Verzüge oder Verzerrungen betrifft. Bekannt sind beispielsweise Verfahren, die mittels Triangulation eine dreidimensionale Oberfläche auf einer dreidimensionalen Freiformfläche erzeugen. Allerdings können sich damit keine Narbstrukturen darstellen lassen, wie sie zum Beispiel bei einer Kuhhaut auftreten, da es sich hier um großflächige Narbungen mit durchgehenden Verästelungen handelt, die organisch gewachsen sind. Bei komplexeren Verfahren werden Verzerrungen in einem mehrstufigen Prozess korrigiert und auch Korrekturen der Narbung empirisch wiederholt vorgenommen werden.

Solche Verfahren arbeiten beispielsweise mit mindestens einer virtuellen oder reellen elastischen Folie, für die zunächst im Formprozess der Freiformfläche hervorgerufenen Dehnungen und Stauchungen in der elastischen Folie bestimmt werden. Der Datensatz wird dann modifiziert, so dass die Dehnungen und Stauchungen zumindest teilweise kompensiert werden. Anschließend wird bei einer mit dem modifizierten Datensatz strukturierten elastischen Folie auf Verzerrungen in den Mikrostrukturen überprüft und gegebenenfalls der Datensatz erneut modifiziert, bis ein endgültiger Datensatz erhalten ist. Mit diesem digitalen Datensatz wird dann die elastische Folie strukturiert, so dass mindestens eine strukturtragende Fläche auf der Folie erzeugt wird. Für den Tiefziehprozess wird die elastische Folie so auf ein Werkzeug aufgespannt, dass die strukturtragende Fläche dem Werkzeug zugewandt ist. Dies hat den Vorteil, dass unterschiedliche Foliendicken keinen Einfluss auf die Maßhaltigkeit des entstehenden Formteils haben. Dann wird eine Druckdifferenz zwischen der Seite der strukturtragenden Fläche der elastischen Folie und deren rückseitiger Fläche erzeugt, so dass die elastische Folie in Richtung auf das Werkzeug gezogen wird. Bevorzugt ist es, die Druckdifferenz durch Anlegen von Vakuum zu erzeugen, denn da die strukturierte Fläche dem Werkzeug zugewandt ist, kann das Vakuum gut über die gesamte Folienoberfläche wirken. Es kann aber auch mit einer Druckbeaufschlagung gearbeitet werden. Derartige Verfahren sind aus der WO 02/43946 A, der WO 2006/042319 A2 und aus der US 2005/146073 A1 bekannt Im Besonderen beschreibt WO 02/042319 die technischen Merkmale des Oberbegriffs des vorliegenden Verfahrensanspruchs 1.

Davon ausgehend ist es die Aufgabe der Erfindung, ein gattungsgemäßes Verfahren derart weiterzuentwickeln, dass es die Fertigung eines funktionsfähigen Formteils mit einer sehr hohen Genauigkeit der strukturtragenden Fläche ermöglicht.

Erfindungsgemäß wird über einen speziellen Prozess die Reibung zwischen elastischer Folie und Werkzeug reduziert, so dass sich eine relativ homogene Spannung in der Folie ausbilden kann.Dazu wird ein reibungsminderndes Fluid zwischen Folie und Werkzeug gebraucht.

Das reibungsmindernde Fluid ist ein aushärtbares Fluid , welches nach abgeschlossener Spannungsrelaxation der Folie an der Folie ausgehärtet wird. Das aushärtbare Fluid kann auch Trennmittel enthalten, das mit Keramikpigmenten versehen ist, oder elektrisch leitende Mittel, um ein späteres Entformen oder Beschichten zu vereinfachen. Eine weitere Maßnahme besteht darin, in Teilbereichen der Grenzfläche zwischen Folie und Werkzeug ein oder mehrere Gleitpolster zu erzeugen. Dazu wird das Werkzeug beispielsweise mit zahlreichen Bohrungen versehen, die in der Grenzfläche zwischen Folie und Werkzeug münden, welche mit einem Fluid beaufschlagt werden, um so das Vakuum an diesen Stellen zu reduzieren. Die Folie kann sich wegen der verminderten Reibung relaxieren, so dass eine sehr homogene Spannungsverteilung erzeugt werden kann.

Die Erfindung beruht auf der Erkenntnis, dass die Verzüge und Verzerrungen bei mikrostrukturierten dreidimensionalen Oberflächen dann nicht wahrnehmbar sind, wenn die Folie weitgehend spannungsrelaxiert ist. Das Verfahren kann auch mit bedruckten Folien angewendet werden, wobei die Farbe als rein optische Information analog wie die haptischoptische Dessinstruktur bzw. Narbstruktur behandelt wird.

Um ein Bauteil oder Formteil mit einer hochwertigen dreidimensionalen Oberfläche herstellen, wird also zunächst eine elastische Folie mittels Laserstrahlung strukturiert oder von einer Walze oder Platte, die zuvor mittels Laserstrahlung strukturiert wurde, abgeformt. Der Datensatz ist dabei an die Freiformfläche des Bauteils angepasst. Nun erfolgen zahlreiche Modifikationen des Datensatzes, so dass eine Verzerrung beispielsweise der Narbstruktur für den Betrachter nicht mehr sichtbar ist und auch großflächige Narbstrukturen mit zahlreichen Verästelungen darstellbar sind.

Grundsätzlich können die haptisch und/oder optisch wahrnehmbaren Mikrostrukturen auf beiden Seiten der Folie angebracht werden. So können sich beispielsweise bei der Verwendung transparenter Folien Farbeffekte erzielen lassen. Die Bedruckung kann mittels Siebdruck, Tiefdruck, Flexodruck, Digitaldruck oder Reliefdruck erfolgen.

Für den Tiefziehprozess ist es nun erfindungsgemäß nötig, die unterschiedliche Dehnung der elastischen Folie nach dem Aufspannen auf das Bauteil beim Tiefziehen zu berechnen. Die Stellen mit einer sehr starken Dehnung werden im Datensatz für die Laserung entsprechend gestaucht und umgebende Bereiche gedehnt. Das Gleiche gilt für die Tiefenkorrektur, so werden Bereiche mit starker Dehnung mit einer größeren Tiefe versehen als Bereiche mit geringerer Dehnung. Stauchung und Dehnung haben dabei eine Größenordnung von etwa 10 bis 30 %. Größere Stauchungen führen zu Veränderungen der Narbstruktur, die nachher für den Betrachter sichtbar sind und als Verzerrungen oder Unschärfe erkannt werden.

Als mathematisches Instrument hat sich die Finite-Element-Berechnung bewährt, die dann sowohl die Verzerrung der haptischen und/oder optischen Mikrostrukturen als auch das Rückseitenprofil der zu lasernden elastischen Folie berücksichtigt. Dabei wird die Berechnung mit veränderten Parametern so lange wiederholt, bis das optimale Ergebnis vorliegt.

Bei einer speziellen Ausführungsform der Erfindung kann, wenn die Spannungsreduzierung optimiert wird, auf Schritte wie partielles Stauchen, Dehnen oder dergleichen verzichtet werden und dennoch ein gutes Ergebnis erzielt werden, da die Verzerrung der Mikrostrukturen über den Tiefziehprozess weitgehend proportional zu den Spannungsunterschieden innerhalb der Folie ist. Dabei wird lediglich eine über die Folie homogene Verzerrung angelegt, nämlich die Flächen- und Tiefenanpassung, die in allen Bereichen gleich ist. Die Berechnung über finite Elemente kann entfallen. Lediglich die Grunddehnung der Folie muss ermittelt werden.

Im Folgenden soll die Erfindung anhand der Zeichnung näher erläutert werden. Es zeigt:
- Figur 1: in Teilbildern a und b eine elastische Folie mit einem virtuellen Gitternetz vor und nach einem Tiefziehprozess;
- Figur 2: in schematischer Querschnittdarstellung eine direktstrukturierte Folie, die tiefgezogen werden soll;
- Figur 3: eine schematische Darstellung, die die Auswirkung unterschiedlicher Reibung auf die Dehnung der Folie darstellt;
- Figur 4: die tiefgezogene Folie im Werkzeug;
- Figur 5: den Einsatz der Vakuumreduktion zur Reibungsverminderung;
- Figur 6: das durch Vakuumreduktion erzeugte Gleitpolster zur Reibungsverminderung;
- Figur 7: die fertiggestellte tiefgezogene Folie, mit einer Hinterfiitterung versehen; und
- Figur 8: das fertige Formteil.

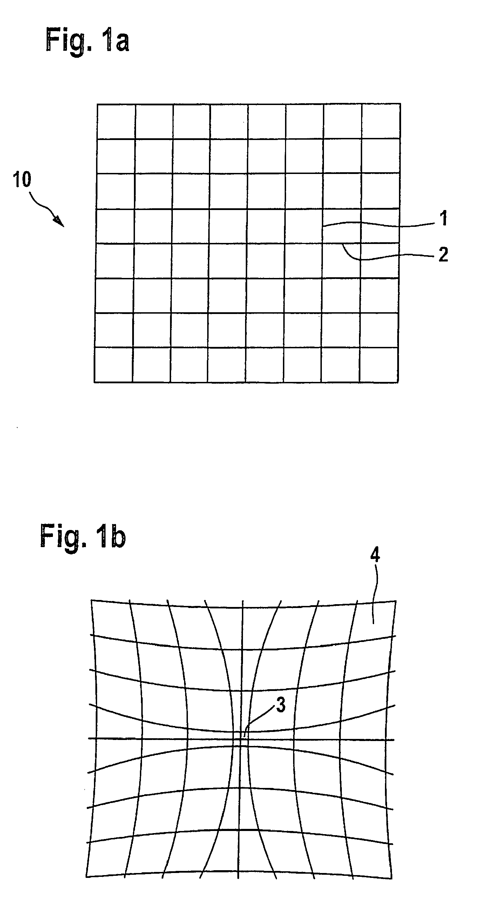

Figur 1a zeigt eine elastische Folie 10, auf die ein virtuelles Gitternetz aus im wesentlichen parallelen und orthogonal zueinander verlaufenden Linien 1, 2 aufgetragen ist. Bei einem späteren Tiefziehprozess, in Figur 1b veranschaulicht, werden Stellen 3 mit einer hohen Dehnung gestaucht und Stellen 4 mit einer geringen Dehnung gedehnt. Der Datensatz beispielsweise einer Narbenstruktur wird entsprechend angepasst und kann nun zum Beispiel über eine Laserstrukturierung in die Folie übertragen werden.

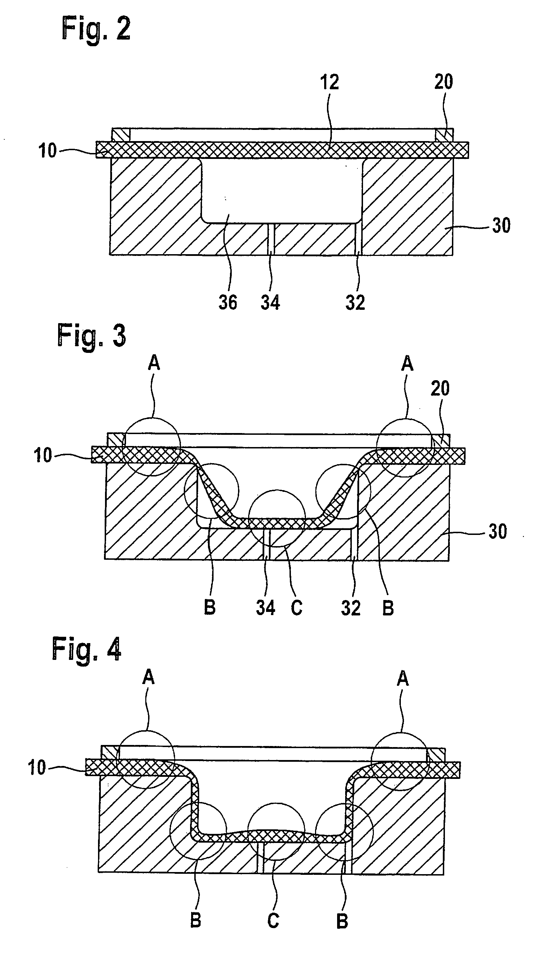

In Figur 2 wird anhand eines Tiefziehprozesses veranschaulicht, wie eine strukturierte Folie 10 weiter bearbeitet wird. Die Folie 10 wird mit ihrer strukturierten Flächen 12 zu einem vorbereiteten Werkzeug 30 weisend mittels eines umlaufenden Rahmens 20 auf das Werkzeug 30 gespannt. Der unter der Folie 10 liegende Raum des Werkzeugs 30 wird nun beispielsweise über Röhren 32, 34 mit Vakuum beaufschlagt. Anstelle der Vakuumbeaufschlagung kann auch von der freiliegenden Oberseite der Folie 10 her ein Druck aufgegeben werden. Die Folie 10 wird bei wirkendem Vakuum zunächst in den Bereichen A auf die Oberfläche des Werkzeugs 30 treffen, dort, wo die Folie 10 in Kontakt der Oberfläche des Werkzeugs 30 gerät, entsteht Reibung zwischen der Folie 10 und der Oberfläche des Werkzeugs, die einer weiteren Dehnung der Folie 10 in den Bereichen A entgegenwirkt. Entsprechendes gilt, wenn die Folie 10 im Bereich C am Boden des Werkzeugs 30 anliegt. Die Bereiche B der Folie 10, die noch keinen Kontakt zur Oberfläche des Werkzeugs 30 haben, dehnen sich dementsprechend mehr.

Figur 4 zeigt das Ergebnis. Die Folie 10 ist in den Bereichen A am wenigsten gedehnt, d. h. am dicksten, stärker gedehnt im Bereich C und am meisten in Bereichen B. Diese unterschiedlichen Dehnungen sind nicht erwünscht und sollten kompensiert werden.

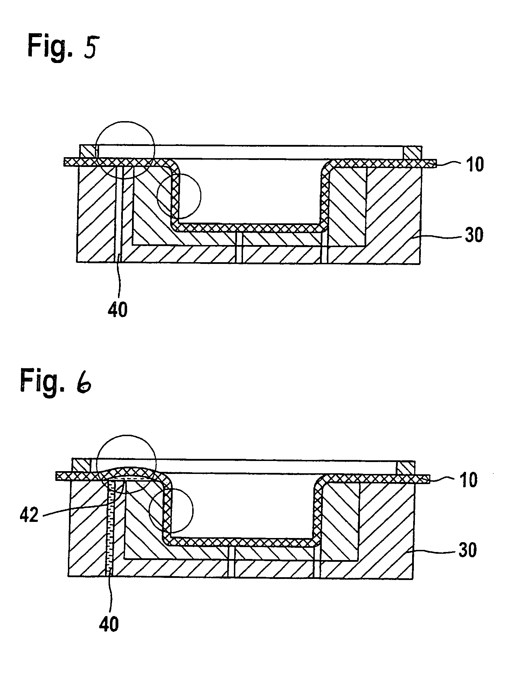

Eine weitere Verbesserung kann erreicht werden, wenn zwischen Folie 10 und Werkzeug 30 das Vakuum gezielt reduziert wird. Zu diesem Zweck kann eine Vielzahl von Bohrungen 40 im Werkzeug 30 angebracht werden, von denen in Figur 5 nur eine gezeigt ist, die mit einem Fluid, beispielsweise einem Gleitmittel, beaufschlagt werden. Dadurch wird, wie in Figur 10 gezeigt, die Reibung zwischen der Folie 10 und dem Werkzeug 30 drastisch reduziert und hier ein Gleitpolster 42 erzeugt, während das Vakuum in anderen Bereichen die Folie 10 am Werkzeug 30 hält. Durch die im Regelfall mehreren Gleitpolster 42 können sich nun die Spannungsunterschiede innerhalb der Folie 10 weiter abbauen. Die im Tiefziehprozess eingesetzten Folien werden in der Regel nicht thermoplastisch umgeformt. Daher können die Gleitpolster 42 mehrmals und immer wieder im Wechsel angesteuert werden. Mit jeder Wiederholung des Auf- und Abbaus dieser Gleitpolster 42 reduzieren sich die Spannungsunterschiede in der Folie 10 und gehen gegen Null.

Erfindungsgemäß ist vorgesehen, als Gleitmittel ein aushärtbares Medium vorzusehen, beispielsweise ein Polymer. Sobald die Spannungsrelaxation abgeschlossen ist, wird das Polymer an der Folie 10 ausgehärtet. Die Folie 10 kann nun von dem Werkzeug 30 entfernt werden, und es steht ein funktionsfähiges Formteil zur Verfiigung, das im wesentlichen in nur zwei Arbeitsschritten, nämlich der Laserung der Folie 10 zum Aufbringen der Mikrostruktur und Tiefziehen der Folie 10 hergestellt wurde. Da die Polymerschicht direkt auf dem Werkzeug hergestellt und ausgehärtet wird, entsteht ein funktionsfähiges Formteil mit einer sehr hohen Genauigkeit, die die von Silikonabgüssen oder gesinterten Abformungen oder ähnlichen Verfahren deutlich übersteigt. Das aushärtbare Medium kann wahlweise auch ein Trennmittel sein und Keramikpigmente oder ähnliches enthalten, weiter kann ein Leitlack verwendet werden, der Metallpigmente oder dergleichen enthält, um so eine anschließende Beschichtung oder Abformung zu vereinfachen.

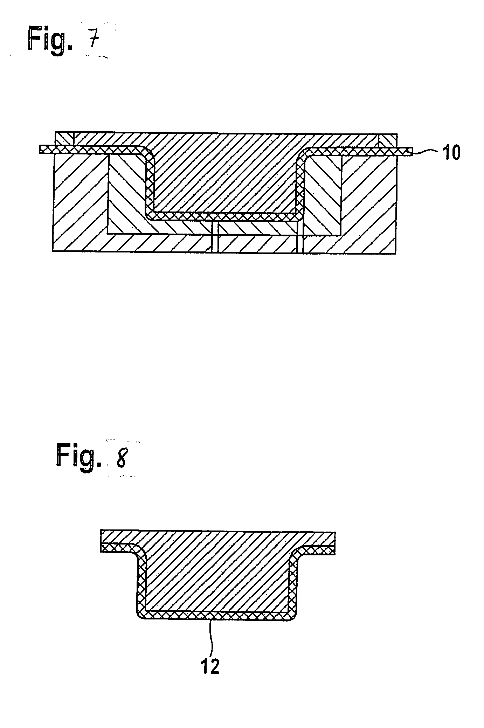

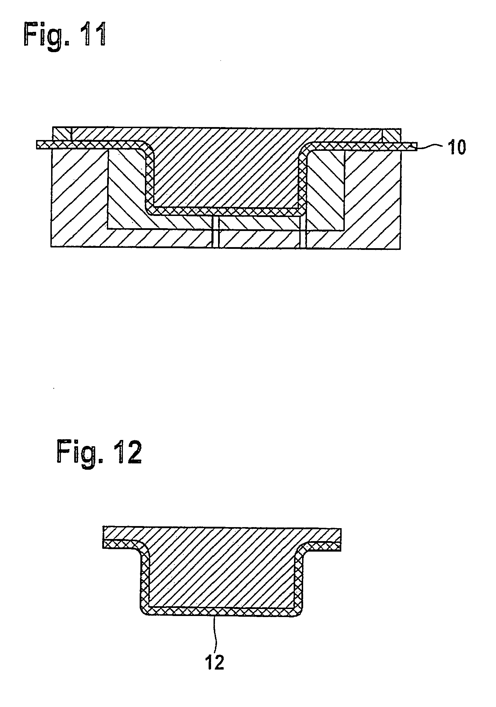

Eine Alternative, ein Bauteil herzustellen, besteht darin, wie in Figur 7 gezeigt, die Folie 10, die jetzt spannungsrelaxiert ist, zu hinterfüllen, beispielsweise mit einem schäumbaren Polymer oder einem mit Fasern verstärkten Polymer. Die homogenen, elastischen Spannungen innerhalb der Folie 10 werden durch diese Maßnahme eingefroren. Anschließend wird das Bauteil entformt. Ebenso entsteht so ein Bauteil mit höchster Maßhaltigkeit. Es steht nun, wie in Figur 12 gezeigt, ein Bauteil mit einer hochwertigen Narbstruktur auf der strukturierten Fläche 12 zur Verfügung, das als Formwerkzeug, Kopiervorlage oder als Formteil eingesetzt werden kann.

Als weiteres Beispiel soll beschrieben werden, wie das erfindungsgemäße Verfahren zum Herstellen eines Bauteiles mit einer dreidimensionalen Oberfläche genutzt werden kann, ohne dass dabei tatsächlich eine elastische Folie eingesetzt wird. In diesem Fall wird analog zum oben beschriebenen Prozess ein virtuelles Bauteil mit einer virtuellen Folie bespannt. Der daraus resultierende Datenbestand kann jetzt in ein Vektordatenmodell umgewandelt werden, das als Grundlage für ein Bauteil mit einer genarbten dreidimensionalen Freiformfläche dient.

Diese Freiformfläche kann nun über bekannte Verfahren, wie Stereolithographie, Lasersintern, Fräsen, Funkenerosion oder Laserdirektstrukturierung erzeugt werden. In der Praxis erweist sich dies jedoch als äußerst schwierig. So gibt es beispielsweise Lösungsansätze, die Bauteile über eine Laserdirektstrukturierung herzustellen. Die Führung des Laserstrahls ist dabei aufgrund der hohen benötigten Auflösung in der Praxis nicht möglich, da die orthogonale Positionierung des Laserstrahls mit einer Genauigkeit von einigen wenigen Mikrometern mit heutigen Werkzeugmaschinen bei großen Werkzeugen nicht gelingt. Ebenso ist die Positionierung des Lasers schwierig, wenn das Werkzeug über starke Aspektverhältnisse verfügt und somit nicht für einen Laser- oder Fräskopf zugänglich ist. Bei der Stereolithographie ist dies ebenso problematisch, da zum einen mit einem Laserstrahl gearbeitet wird, der über einen zentralen Spiegel das Bauteil über einen Belichtungsprozess herstellt und sich somit der Strahlquerschnitt je nach Position der zu belichtenden Bauteiloberfläche verändert. Zum anderen sind die so hergestellten Bauteile aus Fotopolymeren nicht für den Einsatz als verschleißfeste Werkzeuge geeignet. Lasergesinterte Bauteile haben im Vergleich zur Stereolithographie von Fotopolymeren zwar sehr gute Verschleißeigenschaften, zeigen jedoch weder Maßhaltigkeit noch hohe Auflösung.

Daher wird zunächst ein Stahlkern mit einem Abmaß gefräst. Das Abmaß entspricht dabei mindestens der Narbtiefe. Der Stahlkern dient dazu, der späteren Freiformfläche eine höhere Stabilität und Maßhaltigkeit zu geben. Im folgenden Belichtungsprozess wird nun mit Hilfe des digitalen Datenbestandes die Narbung direkt auf dem Stahlkern erzeugt. Der Laser wird dabei nur in zwei Achsen bewegt, der X-Achse und der Y-Achse. Eine Z-Achse wird nur notwendig, wenn nicht im Autofokus-Modus gearbeitet wird. Die dreidimensionale Oberfläche wird nun scheibenweise abgefahren oder das Bauteil wird in eine Rotation versetzt und der Laser nur in einer Achse verfahren. Spiralbelichtung, Zeilenbelichtung und Konturbelichtung sind möglich.

Der digitale Datenbestand kann auch für andere Fertigungsverfahren, wie Frästechnologie, Funkenerosion und dergleichen, zur Werkzeugherstellung genutzt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

Eine Alternative, ein Bauteil herzustellen, besteht darin, wie in Figur 11 gezeigt, die Folie 10, die jetzt spannungsrelaxiert ist, zu hinterfüllen, beispielsweise mit einem schäumbaren Polymer oder einem mit Fasern verstärkten Polymer. Die homogenen, elastischen Spannungen innerhalb der Folie 10 werden durch diese Maßnahme eingefroren. Anschließend wird das Bauteil entformt. Ebenso entsteht so ein Bauteil mit höchster Maßhaltigkeit. Es steht nun, wie in Figur 12 gezeigt, ein Bauteil mit einer hochwertigen Narbstruktur auf der strukturierten Fläche 12 zur Verfügung, das als Formwerkzeug, Kopiervorlage oder als Formteil eingesetzt werden kann.

Als weiteres Beispiel soll beschrieben werden, wie das erfindungsgemäße Verfahren zum Herstellen eines Bauteiles mit einer dreidimensionalen Oberfläche genutzt werden kann, ohne dass dabei tatsächlich eine elastische Folie eingesetzt wird. In diesem Fall wird analog zum oben beschriebenen Prozess ein virtuelles Bauteil mit einer virtuellen Folie bespannt. Der daraus resultierende Datenbestand kann jetzt in ein Vektordatenmodell umgewandelt werden, das als Grundlage für ein Bauteil mit einer genarbten dreidimensionalen Freiformfläche dient.

Diese Freiformfläche kann nun über bekannte Verfahren, wie Stereolithographie, Lasersintern, Fräsen, Funkenerosion oder Laserdirektstrukturierung erzeugt werden. In der Praxis erweist sich dies jedoch als äußerst schwierig. So gibt es beispielsweise Lösungsansätze, die Bauteile über eine Laserdirektstrukturierung herzustellen. Die Führung des Laserstrahls ist dabei aufgrund der hohen benötigten Auflösung in der Praxis nicht möglich, da die orthogonale Positionierung des Laserstrahls mit einer Genauigkeit von einigen wenigen Mikrometern mit heutigen Werkzeugmaschinen bei großen Werkzeugen nicht gelingt. Ebenso ist die Positionierung des Lasers schwierig, wenn das Werkzeug über starke Aspektverhältnisse verfügt und somit nicht für einen Laser- oder Fräskopf zugänglich ist. Bei der Stereolithographie ist dies ebenso problematisch, da zum einen mit einem Laserstrahl gearbeitet wird, der über einen zentralen Spiegel das Bauteil über einen Belichtungsprozess herstellt und sich somit der Strahlquerschnitt je nach Position der zu belichtenden Bauteiloberfläche verändert. Zum anderen sind die so hergestellten Bauteile aus Fotopolymeren nicht für den Einsatz als verschleißfeste Werkzeuge geeignet. Lasergesinterte Bauteile haben im Vergleich zur Stereolithographie von Fotopolymeren zwar sehr gute Verschleißeigenschaften, zeigen jedoch weder Maßhaltigkeit noch hohe Auflösung.

Daher wird zunächst ein Stahlkern mit einem Abmaß gefräst. Das Abmaß entspricht dabei mindestens der Narbtiefe. Der Stahlkern dient dazu, der späteren Freiformfläche eine höhere Stabilität und Maßhaltigkeit zu geben. Im folgenden Belichtungsprozess wird nun mit Hilfe des digitalen Datenbestandes die Narbung direkt auf dem Stahlkern erzeugt. Der Laser wird dabei nur in zwei Achsen bewegt, der X-Achse und der Y-Achse. Eine Z-Achse wird nur notwendig, wenn nicht im Autofokus-Modus gearbeitet wird. Die dreidimensionale Oberfläche wird nun scheibenweise abgefahren oder das Bauteil wird in eine Rotation versetzt und der Laser nur in einer Achse verfahren. Spiralbelichtung, Zeilenbelichtung und Konturbelichtung sind möglich.

Der digitale Datenbestand kann auch für andere Fertigungsverfahren, wie Frästechnologie, Funkenerosion und dergleichen, zur Werkzeugherstellung genutzt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Erzeugen einer dreidimensionalen Freiformfläche mit haptisch und/oder optisch wahrnehmbaren Mikrostrukturen, wobei die Mikrostrukturen als Datensatz festgehalten sind, mit den Schritten:
a) Bereitstellen mindestens einer virtuellen oder reellen elastischen Folie (10);
b) Bestimmen der im Formprozess der Freiformfläche hervorgerufenen Dehnungen und Stauchungen in der elastischen Folie (10);
c) Modifizieren des Datensatzes, so dass die Dehnungen und Stauchungen zumindest teilweise kompensiert werden;
d) Überprüfen einer mit dem modifizierten Datensatz strukturierten elastischen Folie (10) auf Verzerrungen in den Mikrostrukturen;
e) gegebenenfalls Wiederholen der Schritte b) bis d), bis ein endgültiger Datensatz erhalten ist;
f) Strukturieren der elastischen Folie (10), so dass mindestens eine strukturtragende Fläche (12) auf der Folie (10) erzeugt wird;
g) Aufspannen der elastischen Folie (10) auf ein Werkzeug (30), so dass die strukturtragende Fläche dem Werkzeug (30) zugewandt ist; und
h) Erzeugen einer Druckdifferenz zwischen der Seite der strukturtragenden Fläche der elastischen Folie (10) und deren rückseitiger Fläche, so dass die elastische Folie (10) in Richtung auf das Werkzeug (30) gezogen wird,
**dadurch gekennzeichnet, dass** ein reibungsminderndes Fluid zwischen Folie (10) und Werkstück gebracht wird, wobei das reibungsmindernde Fluid ein aushärtbares Fluid ist, welches nach abgeschlossener Spannungsrelaxation der Folie an der Folie ausgehärtet wird.

2. Verfahren nach Anspruch 1, **dadurch gekennzeichnet, dass** mindestens ein Gleitpolster (42) zwischen Werkzeug (30) und Folie (10) erzeugt wird.

3. Verfahren nach Anspruch 2, **dadurch gekennzeichnet, dass** mindestens eines der Gleitpolster (42) mehrfach aktiviert und deaktiviert wird.

4. Verfahren nach Anspruch 2, **dadurch gekennzeichnet, dass** mindestens zwei der Gleitpolster (42) wechselweise aktiviert und deaktiviert werden.

5. Verfahren nach Anspruch 1, **dadurch gekennzeichnet, dass** das aushärtbare Fluid Trennmittel enthält.

6. Verfahren nach Anspruch 5, **dadurch gekennzeichnet, dass** das Trennmittel Keramikpigmente aufweist.

7. Verfahren nach Anspruch 1, **dadurch gekennzeichnet, dass** das aushärtbare Fluid elektrisch leitende Mittel enthält.

## Claims

1. A method of producing a three-dimensional structured surface with haptically and/or optically detectable microstructures that are fixed as a dataset, the method comprising:
a) preparing a virtual or real elastic film (10);
b) determining the elongations and compressions in the elastic film (10) produced in a shaping process of the structured surface;
c) modifying the dataset so that the elongations and compressions are at least partially compensated;
d) checking an elastic film (10) structured with the modified dataset for distortions in the microstructures;
e) if necessary, repeating steps b) through d) until a final dataset is obtained;
f) structuring the elastic film (10), so that a structure-supporting surface (12) is produced on the film (10);
g) spanning the elastic film (10) onto a die (30) so that the structure-supporting surface (12) is facing the die (30); and
h) applying a pressure difference between the side of the elastic film (10) carrying the structure-supporting surface (12) and the rearward surface thereof, so that the elastic foil (10) is pulled in direction towards the die (30),
**characterized in that** a friction-reducing fluid is introduced between the film (10) and the die, wherein the friction-reducing fluid is a curable fluid that is cured at the foil after stress relaxation of the foil is completed.

2. The method according to claim 1, wherein at least one sliding cushion (42) is produced between the die (30) and the film (10).

3. The method according to claim 2, wherein at least one of said sliding cushions (42) is repeatedly activated and deactivated.

4. The method according to claim 2, wherein at least two sliding cushions (42) are activated and deactivated in alternation.

5. The method according to claim 1, wherein the curable fluid contains a parting agent.

6. The method according to claim 1, wherein the parting agent has ceramic pigments.

7. The method according to claim 13, wherein the curable fluid contains electrically-conducting agents.

## Revendications

1. Procédé de production d'une surface à forme libre tridimensionnelle avec des microstructure perceptibles de manière haptique et/ou optique, les microstructures étant enregistrées en tant qu'ensembles de données, avec les étapes suivantes :
a) mise à disposition d'un film élastique virtuel ou réel (10) ;
b) détermination des dilatations et compressions dans le film élastique (10), provoquées dans le processus de formage de la surface à forme libre ;
c) modification de l'ensemble de données de façon à ce que les dilatations et compressions soient compensées au moins partiellement ;
d) contrôle d'un film élastique (10) structurée avec l'ensemble de données modifié afin de détecter des distorsions dans les microstructures ;
e) le cas échéant, répétition des étapes b) à d) jusqu'à ce qu'un ensemble de données définitif soit obtenu ;
f) structuration du film élastique (10) de façon à ce qu'au moins une surface comportant une structure (12) soit produite sur le film (10) ;
g) tension du film élastique (10) sur un outil (30) de façon à ce que la surface comportant des structures soit orientée vers l'outil ; et
h) génération d'une différence de pression entre le côté de la surface du film élastique (10) comportant des structures et sa surface arrière, de façon à ce que le film élastique (10) soit étiré en direction de l'outil (30),
**caractérisé en ce qu'**un fluide réduisant les frictions est appliqué entre le film (10) une pièce à usiner, le fluide réduisant les frictions étant un fluide durcissable qui est durci sur le film après soulagement des tensions du film.

2. Procédé selon la revendication 1, **caractérisé en ce qu'**au moins une garniture glissante (42) est produite entre l'outil (30) et le film (10).

3. Procédé selon la revendication 2, **caractérisé en ce qu'**au moins une des garnitures glissantes (42) est activée et désactivée plusieurs fois.

4. Procédé selon la revendication 2, **caractérisé en ce qu'**au moins deux des garnitures glissantes (42) sont alternativement activées et désactivées.

5. Procédé selon la revendication 1, **caractérisé en ce que** le fluide durcissable contient des moyens de séparation.

6. Procédé selon la revendication 5, **caractérisé en ce que** le moyen de séparation comprend des pigments de céramique.

7. Procédé selon la revendication 1, **caractérisé en ce que** le fluide durcissable contient des moyens électro-conducteurs.
